# EUROPEAN PATENT SPECIFICATION

(11) **EP 0 560 419 B1**
(45) Date of publication and mention of the grant of the patent: **27.12.1996**
(21) Application number: 93200513.5
(22) Date of filing: 24.02.1993
(51) Int. Cl.: F23D 14/64, F23D 14/46

(54) **Method of manufacturing a gas feeder for a gas burner and a product obtained by the method**
Verfahren zur Herstellung eines Gaszuführsystems für einen Gasbrenner und daraus erhaltenes Produkt
Procédé de fabrication d'un système d'alimentation en gaz pour un brûleur à gaz et produit obtenus par le dit procédé

(30) Priority: 11.03.1992 IT MI920561
(43) Date of publication of application: 15.09.1993
(73) Proprietor: WORGAS BRUCIATORI S.R.L., I-41043 Formigine (IT)
(72) Inventor: Sebastiani, Enrico, I-20025 Legnano - Milano (IT)
(74) Representative: Maggioni, Claudio

(56) References cited:
- GB-A- 984 819
- US-A- 3 768 962
- PATENT ABSTRACTS OF JAPAN vol. 014, no. 327 (M-998) 13 July 1990 & JP-02 110 208 (RINNAI) 23 April 1990

## Description

This invention relates to gas burners, particularly to a method of manufacturing a gas feeder for a gas burner and a gas feeder manufactured by the method.

Burner nozzles have been conventionally provided as machine metal pieces which are turned from an axially bored hexagonal bar stock, usually made of brass. These are threaded to screw fit into matingly threaded holes in a gas delivery conduit.

The manufacture of such nozzles is relatively expensive because the provision of the threads involves a machining step. A similar machining step is obviously required for the conduit as well. In addition, the assembly of the nozzle to the conduit, whether performed manually or on automated equipment, is time consuming.

These shortcomings affect especially the manufacture of burners including a large number of nozzles.

In an Italian Utility Model Patent Application entitled "Ugello in lamierino stampato per bruciatore di gas" (Stamped Sheet Metal Nozzle for a Gas Burner) filed on March 10, 1992 by this Applicant, it has been proposed stamping a nozzle from a sheet metal blank to provide a shaped nozzle suitable for mounting into a hole in the conduit by an interference fit. The nozzle consists substantially of two coaxial parts, a cylindrical outer part and a funnel-shaped inner part, joined to each other along one edge. The assembly is performed by driving the nozzle into the hole in the conduit.

This prior approach does overcome the aforementioned shortcomings, it making for a more economical manufacture of the nozzles and faster assembly thereof. However, it cannot unfailingly ensure a tight fit between the nozzle and the hole in the counduit, and requires the use of a seal or some appropriate sealing compound between the nozzle and the conduit. The need for such an additional assembly step partly defeats the benefits to be derived from that approach.

It is the object of this invention to provide a gas feeder comprising a gas supply conduit and at least one nozzle, which additionally to being simple and inexpensive to manufacture can ensure a tight nozzle-to-conduit fit.

From Patent Abstracts of Japan vol. 014 no. 327 & JP-A-02110208 a method is known for manufacturing a gas feeder for a gas burner comprising the steps according to the preamble of claim 1.

The object of the invention is achieved by a manufacturing method further comprising the step according to the characterizing portion of claim 1.

The invention can be better understood by having reference to the following detailed description of two non-limitative embodiments thereof, to be taken in conjunction with the accompanying drawings, in which:
- Figures 1A and 1B are fragmentary sectional views showing a gas feeder at two stages of the inventive method;
- Figures 2A and 2B are sectional views of an alternative embodiment of a gas feeder, shown at two stages of the inventive method; and
- Figure 3 is a perspective view, not drawn to scale, of a portion of a gas feeder including a pipe header and multiple nozzles, formed by the method of this invention.

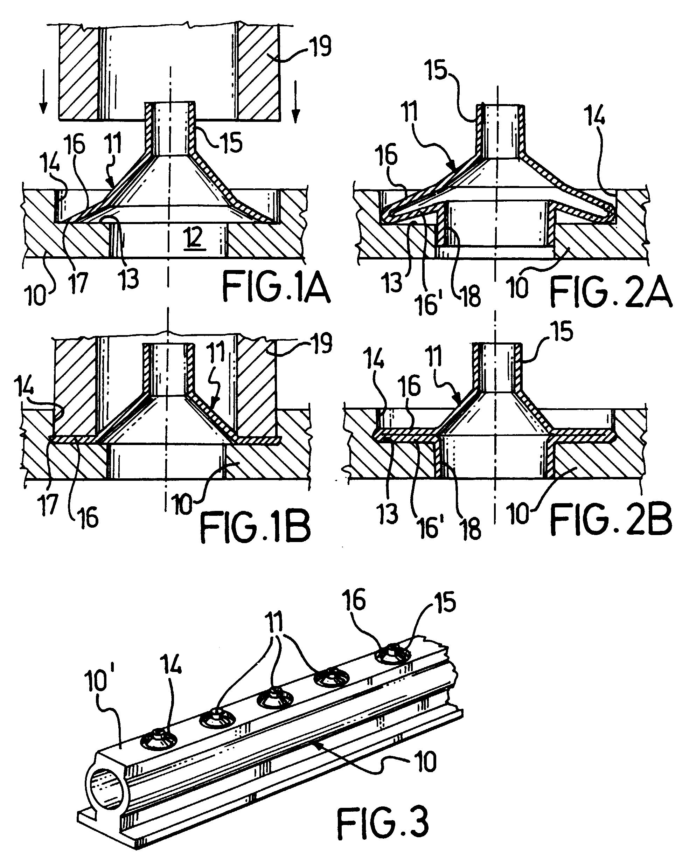

Shown at 10 in Figures 1A and 1B is the wall of a gas conduit, such as a pipe header similar to that depicted in Figure 3, and at 11 a nozzle stamped from sheet metal. The conduit 10 has a circular opening 12 which widens out stepwise toward the conduit exterior so as to provide a depressed region adapted to form a seat for the nozzle. This seat comprises a base 13 having an annular surface and a side wall 14 having a substantially cylindrical surface. The nozzle 11 has a basically funnel-like shape with an outlet conduit 15 which forms the nozzle bore and with a peripheral portion arranged to bear on the seat base 13. Figure 1A shows the two portions during the manufacturing step which precedes the securing step; it can be seen that the end diameter of the nozzle peripheral portion 16 is slightly smaller than the large diameter of the base 13 annulus. The conical portion of the funnel shape adjoining the outlet conduit 15 has preferably a taper angle of 60°, and its conical periphery 16 has a taper angle of 120° or more.

The step of securing the nozzle 11 on the conduit 10 involves application of a compressive force to the nozzle 11 to thereby expand its peripheral or edge region 16 by deformation until said region engages, by the free end 17 thereof, the cylindrical side wall 14 that bounds the nozzle seat. This compressive force is preferably applied using a tubular cylinder tool, shown at 19, which can be moved along a coaxial direction with the nozzle and has a working surface substantially to match the base 13 annulus.

Preferably, the sheet metal whence the nozzle 11 is formed would be a harder material, such as brass or stainless steel, than that forming the conduit 10, which may be made of alluminium, and the outer edge 17 of the nozzle is sharp-ended in the example illustrated by Figures 1A and 1B, whereby the nozzle 11 under compression will cut with its edge 17 into the seat side wall 14, and on release of the compressive force, be held securely to the conduit, as shown in Figure 1B, by the undercut brought about by the cutting action. This securement form is effective to provide a good mechanical gas-tight fit.

In the variation shown in Figures 2A and 2B, wherein similar or equivalent parts are denoted by the same reference numerals and the tubular cylinder tool 19 has been omitted for clarity of illustration, the nozzle 11 differs from that shown in Figures 1A and 1B by that its edge region 16 has a portion 16' bent inwardly of the nozzle and a cylindrical portion 18 merging with the bent portion 16'. This cylindrical portion 18 has an outer section substantially similar to that of the narrow portion of the opening 12 and can foster the nozzle centering within the opening as well as an increase of the contact surface area between the nozzle and the opening for improved tightness of the fit.

Where the material of which the nozzle is made is not harder than that of the conduit -- so that the beneficial effect from the cutting action is no longer there -- a circumferential groove, not shown, may be conveniently formed in the cylindrical side wall 14 at the connecting edge to the base 13. This groove should have a width appropriate to allow the circumferential corner edge of the nozzle edge region 16 to penetrate it after the compressive action. Thus, an effective mechanical anchor and excellent tight fit can be also provided.

The gas feeder consisting of the gas supply conduit 10 and some nozzles 11 mounted thereon, is shown in perspective in Figure 3. It is a pipe header for a gas burner, no further shown, and has a flat portion 10' formed with longitudinally aligned holes each to accomodate a nozzle like that shown in Figures 1A and 1B or Figures 2A and 2B.

As is brought forth by a consideration of the examples described above, the gas feeder of this invention is simple and economical to manufacture because the nozzles can be produced in large volumes by a progressive stamping procedure, that is without any machining, and the assembly can be made by just exerting a push force on the nozzles as may effectively and quickly be done on automated equipment. The gas feeder also provides a highly reliable tight fit between the nozzle and the conduit by virtue of the securement form described above.

## Claims

1. A method of manufacturing a gas feeder for a gas burner, wherein said feeder includes a gas supply conduit and at least one nozzle, comprising the steps of:
- providing a circular opening (12) in the conduit (10) which widens out stepwise toward the conduit exterior to form a seat for the nozzle having an annulus (13) for its base surface and a substantially cylindrical surface (14) for its side wall;
- providing at least one nozzle (11) with a circular peripheral portion (16) which can be expanded deformably and has an outside diameter dimension lying between the diameters of the seat (13) annulus; and
- placing the nozzle (11) onto the conduit (10) with its circular peripheral portion (16) resting on the seat (13,14) formed in the conduit;
characterized by the step of :
- securing the nozzle (11) to the conduit (10) through a compressive action effective to cause its peripheral portion (16) to expand by deformation until the outer edge (17) thereof engages the side wall (14) of the seat (13,14).

2. A gas feeder formed by the method of Claim 1 for a gas burner comprising a gas supply conduit and at least one nozzle, wherein the conduit (10) has at least one opening (12) therein which widens out stepwise toward the conduit exterior to form an annular seat (13) for the nozzle, characterized in that the nozzle (11) has an edge region (16) expanded by deformation into engagement with a side wall (14) of the seat in the conduit.

3. A gas feeder according to Claim 2, characterized in that the material of which the nozzle (11) is made is harder than that of the conduit (10) and the engagement of the edge region (16) of the nozzle with the side wall (14) of the nozzle seat in the conduit is provided by cutting action.

4. A gas feeder according to Claim 2, characterized in that the side wall (14) of the nozzle (11) seat in the conduit (10) has an annular groove and the engagement of the edge region (16) of the nozzle with the side wall (14) of the nozzle seat in the conduit is provided by interfit in the annular groove.

## Patentansprüche

1. Verfahren zum Herstellen einer Gaszuführeinrichtung für einen Gasbrenner, wobei die Zuführeinrichtung eine Gaszuführleitung und zumindest eine Düse umfaßt, das die Schritte aufweist:
- Bilden einer kreisförmigen Öffnung (12) in der Leitung (10), die sich stufenweise zu der Leitungsaußenseite hin erweitert, um einen Sitz für die Düse zu schaffen, der einen Kreisring (13) für seine Basisoberfläche und eine im wesentlichen zylindrische Oberfläche (14) für seine Seitenwand besitzt;
- Bilden mindestens einer Düse (11) mit einem kreisförmigen, peripheren Bereich (16), der deformierbar erweitert werden kann und eine Außendurchmesserdimension besitzt, die zwischen den Durchmessern des Sitzes (13) des Kreisrings liegt; und
- Plazieren der Düse (11) auf der Leitung (10), wobei deren kreisförmiger, peripherer Bereich (16) auf dem Sitz (13,14) ruht, der in dem Kanal gebildet ist;
gekennzeichnet durch die Schritte:
- Sichern der Düse (11) an der Leitung (10) durch eine kompressive Wirkung, die dahingehend effektiv ist, daß sich deren peripherer Bereich (16) durch Deformation erweitert, bis die äußere Kante (17) davon in die Seitenwand (14) des Sitzes (13, 14) eingreift.

2. Gaszuführeinrichtung, die durch das Verfahren nach Anspruch 1 gebildet ist, für einen Gasbrenner, die eine Gaszuführleitung und mindestens eine Düse aufweist, wobei die Leitung (10) mindestens eine Öffnung (12) darin besitzt, die sich außen zu der Leitungsaußenseite hin stufenweise erweitert, um einen kreisförmigen Sitz (13) für die Düse zu bilden, gekennzeichnet dadurch, daß die Düse (11) einen Kantenbereich (16) besitzt, der durch Deformation in Eingriff mit einer Seitenwand (14) des Sitzes in der Leitung erweitert ist.

3. Gaszuführeinrichtung nach Anspruch 2, dadurch gekennzeichnet, daß das Material, aus dem die Düse (11) hergestellt ist, härter als dasjenige der Leitung (10) ist, und daß der Eingriff des Kantenbereichs (16) der Düse mit der Seitenwand (14) des Düsensitzes in der Leitung durch eine Schneidwirkung gebildet ist.

4. Gaszuführeinrichtung nach Anspruch 2, dadurch gekennzeichnet, daß die Seitenwand (14) des Sitzes der Düse (11) in der Leitung (10) eine ringförmige Nut besitzt und der Eingriff des Kantenbereichs (16) der Düse mit der Seitenwand (14) des Düsensitzes in der Leitung mit einem Preßsitz in der ringförmigen Nut gebildet ist.

## Revendications

1. Procédé de fabrication d'un système d'alimentation en gaz destiné à un brûleur à gaz, dans lequel le dit système d'alimentation comprend un conduit d'amenée de gaz et au moins une buse, comprenant les étapes :
- de création d'une ouverture circulaire (12) dans le conduit (10) qui s'élargit par palier vers l'extérieur du conduit pour former un siège destiné à la buse ayant une couronne (13) en tant que surface de base et une surface sensiblement cylindrique (14) en tant que paroi latérale ;
- de création d'au moins une buse ayant une partie périphérique circulaire (16) qui peut être agrandie en se déformant et qui a une dimension de diamètre extérieur qui se trouve entre les diamètres de la couronne de siège (13) ; et
- de mise en place de la buse (11) sur le conduit (10), sa partie périphérique circulaire (13) reposant sur le siège (13,14) formée dans le conduit ;
- caractérisé par l'étape :
- d'immobilisation de la buse(11) dans le conduit (10) par l'intermédiaire d'une action de compression efficace pour faire en sorte que sa partie périphérique (16) s'agrandit par déformation jusqu'à ce que la bordure extérieure (17) de celle-ci vienne en contact avec la paroi latérale (14) du siège (13,14).

2. Système d'alimentation en gaz formé par le procédé de la revendication 1 destiné à un brûleur à gaz comprenant un conduit d'amenée de gaz et au moins une buse, dans lequel le conduit (10) comporte une ouverture (12), laquelle s'élargit par palier vers l'extérieur du conduit pour former un siège annulaire (13) destiné à la buse, caractérisé en ce que la buse (11) comporte une zone de bordure (16) agrandie par déformation jusqu'à l'introduction dans la paroi latérale (14) du siège du conduit.

3. Système d'alimentation à gaz selon la revendication 2, caractérisé en ce que la matière avec laquelle la buse (11) est réalisée est plus dure que celle du conduit (10) et l'introduction de la zone de bordure (16) de la buse dans la paroi latérale (14) du siège de buse du conduit est crée par une action de coupe.

4. Système d'alimentation en gaz selon la revendication 2, caractérisé en ce que la paroi latérale (14) du siège de buse (11) du conduit (10) comporte une rainure annulaire et l'introduction de la région de bordure (16) de la buse dans la paroi latérale (14) du siège de buse du conduit est crée par insertion dans la rainure annulaire.
